(19) **Europäisches Patentamt / European Patent Office / Office européen des brevets**

(11) **EP 2 026 395 A1**

(12) **EUROPEAN PATENT APPLICATION**
published in accordance with Art. 153(4) EPC

(43) Date of publication:
**18.02.2009 Bulletin 2009/08**

(21) Application number: **07743196.3**

(22) Date of filing: **11.05.2007**

(51) Int Cl.:
**H01M 8/04** (2006.01)        **H01M 8/10** (2006.01)

(86) International application number:
**PCT/JP2007/059761**

(87) International publication number:
**WO 2007/132778 (22.11.2007 Gazette 2007/47)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **16.05.2006 JP 2006136283**

(71) Applicants:
- **Toyo Seikan Kaisha, Ltd.**
  **Tokyo 100-8522 (JP)**
- **Kabushiki Kaisha Toshiba**
  **Minato-ku,**
  **Tokyo 105-8001 (JP)**

(72) Inventors:
- **IMODA, Daisuke**
  **Yokohama-shi, Kanagawa 230-0001 (JP)**
- **KINOUCHI, Kouki**
  **Yokohama-shi, Kanagawa 230-0001 (JP)**
- **KAI, Shojiro**
  **Yokohama-shi, Kanagawa 230-0001 (JP)**
- **HASEBE, Hiroyuki**
  **Yokohama-shi, Kanagawa 235-8522 (JP)**

(74) Representative: **TBK-Patent**
**Bavariaring 4-6**
**80336 München (DE)**

(54) **METHANOL FUEL CELL CARTRIDGE**

(57)    Provided is a methanol fuel cell cartridge formed of a container comprising a polyester-based resin layer which has a methanol vapor permeability coefficient at 40°C of 3 $\mu$g·mm/m$^2$·hr or less and a cation index in a methanol immersion test of 30 or less, and is produced by using a titanium-based catalyst. According to the present invention, the methanol fuel cell cartridge can be produced at low cost, which is excellent in impermeability (barrier performance) to methanol and oxygen, can be downsized, reduced in weight, and increased in transparency, and does not cause deterioration in battery performance of the fuel cell during operation.

EP 2 026 395 A1

## Description

Technical Field

The present invention relates to a methanol fuel cell cartridge which is portable and can be favorably used as a fuel tank, a refill container, or the like for a direct methanol fuel cell (DMFC).

Background Art

A direct methanol fuel cell (DMFC) using methanol as a fuel has been drawing attention as a power source for mobile devices such as a laptop computer and a cellular phone, and various types of the direct methanol fuel cells are known (for example, refer to Patent Documents 1 to 3).
In those fuel cells, in order to achieve downsizing of the cells, various ideas have been proposed on the downsizing and weight reduction of a fuel tank (cartridge) for receiving methanol as a fuel (for example, refer to Patent Documents 3 and 4).
Patent Document 1: JP 2004-265872 A
Patent Document 2: JP 2004-259705 A
Patent Document 3: JP 2004-152741 A
Patent Document 4: JP 2004-155450 A
As materials for forming those fuel cartridges for methanol cells, it is proposed to use various plastics including polyolefins such as polyethylene and polypropylene and polyesters such as polyethylene terephthalate and polyethylene naphthalate. Those plastics are used to produce a cartridge by blow molding and the like.
However, when a polyolefin is used as a material for forming a cartridge, the cartridge is required to be a container having a multilayer structure comprising a methanol impermeable layer, and thus, there is a problem that transparency of the cartridge to be obtained becomes low.
On the other hand, a cartridge which is formed by using a polyester through stretch blow molding is excellent in impermeability to methanol and can be downsized, reduced in weight, and increased in transparency. However, when a cartridge is formed of a conventional polyester produced by using a Ge-based catalyst or a Sb-based catalyst, there is a defect in that a catalyst residue therefrom is eluted into methanol received in the cartridge, to thereby cause deterioration in battery performance of the fuel cell during operation.

Disclosure of the Invention

Problems to be solved by the Invention

Accordingly, an object of the present invention is to provide a methanol fuel cell cartridge produced at low cost, which is excellent in impermeability (barrier performance) to methanol and oxygen, can be downsized, reduced in weight, and increased in transparency, and does not cause deterioration in battery performance of the fuel cell during operation.

Means for solving the Problems

The inventors of the present invention have found that the above-mentioned problems can be solved by using a polyester-based resin produced by using a titanium-based catalyst as a material for forming a methanol fuel cell cartridge. Thus, the present invention has been accomplished.
In a preferred embodiment of the present invention, the constitutions described below are adopted.

1. Amethanol fuel cell cartridge, comprising a polyester-based resin layer which has a methanol vapor permeability coefficient at 40°C of 3 $\mu$g·mm/m$^2$·hr or less and a cation index in a methanol immersion test of 30 or less, and is produced by using a titanium-based catalyst.
2. A methanol fuel cell cartridge according to the item 1, in which the polyester-based resin layer is formed of, as a main component, a resin selected from polyethylene terephthalate, polybutylene terephthalate, polyethylene naphthalate, polyethylene isophthalate, and polybutylene isophthalate.
3. A methanol fuel cell cartridge according to the item 1 or 2, in which the cartridge is produced by stretch blow molding.
4. A methanol fuel cell cartridge according to any one of the items 1 to 3, in which the polyester-based resin layer includes an inorganic coating film.
5. A methanol fuel cell cartridge according to any one of the items 1 to 4, in which the cartridge has a multilayer structure comprising a gas barrier layer having an oxygen permeability coefficient measured at 23°C-60%RH of 1.0 × 10$^{-10}$ cc·cm/cm$^2$·sec·cmHg or less.
6. A methanol fuel cell cartridge according to any one of the items 1 to 5, in which the cartridge has a multilayer structure comprising an oxygen absorbable resin layer.

7. A methanol fuel cell cartridge according to any one of the items 1 to 6, comprising a polyester-based resin layer as an innermost layer of the cartridge.

8. A methanol fuel cell cartridge according to any one of the items 1 to 7, in which the cartridge is installed in an outer case formed of a rigid material.

9. A methanol fuel cell cartridge according to any one of the items 1 to 8, in which the methanol fuel cell cartridge comprises a valve mechanism at a pouring portion thereof.

Effects of the Invention

According to the present invention, the methanol fuel cell cartridge can be obtained at low cost, which is excellent in impermeability (barrier performance) to methanol and oxygen, can be downsized, reduced in weight, and increased in transparency, does not cause deterioration in battery performance of the fuel cell during operation, and can perform continuous operation for a long period of time. The methanol fuel cell cartridge of the present invention can be favorably used as a fuel tank or a refill container for DMFC.

Best Mode for carrying out the Invention

Themethanol fuel cell cartridge of the present invention comprises a polyester-based resin layer which has a methanol vapor permeability coefficient at 40°C of 3 $\mu$g·mm/m$^2$·hr or less and a cation index in a methanol immersion test of 30 or less, and is produced by using a titanium-based catalyst.

In the methanol fuel cell cartridge of the present invention, the methanol vapor permeability coefficient of the polyester-based resin layer and the cation index in a methanol immersion test of the resin layer each refer to the value measured as follows.

(Production of resin film)

A resin was preheated at a temperature of a melting point of a resin for forming the cartridge plus 20°C for 7 minutes, pressed at a pressure of 100 kg/cm$^2$ for 1 minute, and pressed under cooling at a temperature of 20 °C and a pressure of 150 kg/cm$^2$ for 2 minutes, to thereby produce a press film having a thickness of 120 $\mu$m.

(Method of measuring methanol vapor permeability coefficient of methanol impermeable resin)

The methanol vapor permeability coefficient (P(MeOH); $\mu$g·mm/m$^2$·hr) was measured at a measurement temperature of 40°C by using the press film obtained by the method described above in accordance with "Test Method for Water Vapor Transmission Rate Through Plastic Film and Sheeting Using a Modulated Infrared Sensor (ASTM F1249)". Methanol of "special grade" manufactured by Wako Pure Chemical Industries, Ltd. was used, and MAS-2000 (manufactured by MAS Technologies, Inc.) was used as a measuring device.

(Cation index)

$$I = 2A + 3B$$

I: cation index

$$A = [Ca] + [Ti] + [Fe] + [Co] + [Ni] + [Zn] + [Ge] + [Mg]$$

$$B = [Al] + [Cr] + [Sb]$$

Note that concentration order of each cation is ppb.

(Measuring method)

Respective element concentrations of [Mg], [Al], [Ca], [Ti], [Cr], [Fe], [Co], [Ni], [Zn], [Ge], and [Sb] are determined, in ppb order, by inductively coupled plasma (ICP) mass spectrometry which uses ICP as an ionization source.
Measuring device: 7500CS manufactured byAgilent Technologies
RF power: 1,500 W, RF matching: 1.7 V
Carrier gas: 0.3 ml/min, make-up gas: 0.65 ml/min
Optional gas: 15%
Reaction gas: $H_2$ 2.5 ml, He 4.5 ml
Suction method: negative pressure suction, shield torch: present

(Test procedure)

25 cc of methanol (special grade) manufactured by Wako Pure Chemical Industries, Ltd. is charged into a cartridge having an internal capacity of 50 cc, and 7.8 g of finely-cut polyester resin pellets is immersed therein, followed by storing at 60°C for a week. The obtained content liquid is used as a test liquid and a measurement is performed.

(Transparency)

The transparency of the cartridge was evaluated, in accordance with JIS K 7105, by determining a underwater light transmittance using ultraviolet and visible spectrophotometer V-570 manufactured by JASCO Corporation.
Further, the oxygen permeability coefficient of the gas barrier layer was measured as follows.

(Method of measuring oxygen permeability coefficient)

The oxygen permeability coefficient ($P(O_2)$; cc·cm/cm$^2$sec·cmHg) at a measurement temperature of 23°C-60%RH was measured by using the press film used for the method of measuring methanol vapor permeability coefficient described above in accordance with "Determination of gas-transmission rate of a Plastics-Film and sheeting (JIS K 7126 B (equal-pressure method))". An oxygen permeability coefficient measuring device (OX-TRAN 2/20: manufactured by MOCON, Inc.) was used as a measuring device.
In the present invention, it is required to use, as a polyester resin for forming a methanol fuel cell cartridge, a polyester produced by using a Ti-based catalyst. When a cartridge is formed of a conventional polyester produced by using a Ge-based catalyst or a Sb-based catalyst, a catalyst residue therefrom is eluted into methanol received in the cartridge to thereby cause deterioration in battery performance of the fuel cell during operation.
On the other hand, a Ti-based catalyst is high in reactivity, and thus, an adding amount of the catalyst can be reduced at the time of producing a polyester resin. Further, the Ti-based catalyst is stable as a compound, and therefore, there is an advantage in that the catalyst is hardly eluted from the obtained polyester resin as cation.
In the present invention, there is no particular limitation in the kind of the polyester resin for forming the methanol fuel cell cartridge. For example, a polyester homopolymer or copolymer can be used. Examples thereof include polyethylene terephthalate (PET), polybutylene terephthalate (PBT), polyethylene naphthalate (PEN), polyethylene isophthalate, and polybutylene isophthalate, each of which is obtained by a reaction between: a dicarboxylic acid component such as terephthalic acid, isophthalic acid, p-β-oxyethoxy benzoic acid, naphthalene-2,6-dicarboxylic acid, diphenoxyethane-4,4'-dicarboxylic acid, 5-sodium sulfoisophthalic acid, adipic acid, sebacic acid, or an alkylester derivative thereof, or a polyvalent carboxylic acid component such as trimellitic acid; and a glycol component such as ethylene glycol, propylene glycol, 1,4-butanediol, neopentyl glycol, 1, 6-hexylene glycol, cyclohexane dimethanol, an ethylene oxide adduct of bisphenol A, diethylene glycol, or triethylene glycol. Further, there may be used a homopolymer or a copolymer such as polylactic acid which may be obtained by a reaction with hydroxycarboxylic acid. One kind of polyester can be used alone, or two or more kinds thereof may be blended and used.
Examples of preferred polyester resins include polyethylene terephthalate, polybutylene terephthalate, polyethylene naphthalate, polyethylene isophthalate, and polybutylene isophthalate, and of those, polyethylene terephthalate is particularly preferred.
The methanol fuel cell cartridge of the present invention comprises at least one polyester-based resin layer which has a methanol vapor permeability coefficient at 40°C of 3 μg·mm/m$^2$·hr or less and a cation index in a methanol immersion test of 30 or less, and is produced by using a titanium-based catalyst. The cartridge may be a container having a single-layer structure formed of only a polyester-based resin layer.
Further, the cartridge of the present invention may be a container having a multilayer structure comprising a polyester-based resin layer and another layer. In this case, the cartridge may have a structure which has two or more polyester-based resin layers.

An inorganic coating film may be formed on an inner surface of the container serving as the methanol fuel cell cartridge of the present invention. Examples of the inorganic coating film include: various carbon coating films such as a diamond-like carbon coating film and a modified carbon coating film; a titanium oxide coating film; a silicon oxide (silica) coating film; an aluminum oxide (alumina) coating film; a ceramic coating film; a silicon carbide coating film; and a silicon nitride coating film.

The container which has the inorganic coating film formed on the inner surface thereof can be produced by: producing, in advance, a hollow container by injection molding, blow molding, or the like; and forming an inorganic coating film on an inner surface of the obtained container by plasma vapor deposition or the like. The technology of forming the inorganic coating film on the inner surface of the hollow container by plasma vapor deposition is known, and for example, a method described in Patent Document 5 may be adopted.

When the inorganic coating film is formed on the inner surface of the container, oxygen permeability thereof is decreased, and in addition, cation elution from the resin layer can be further decreased. Moreover, the inorganic coating filmitself is not eluted as a form of cation.

Patent Document 5: JP 2003-236976 A

When the methanol fuel cell cartridge is formed of a container having a multilayer structure, it is preferred that the container be the one comprising a gas barrier layer having an oxygen permeability coefficient measured at 23°C-60%RH of $1.0 \times 10^{-20}$ cc·cm/cm$^2$·sec·cmHg or less.

The gas barrier layer may be constituted as a resin layer having gas barrier property, a resin layer having oxygen absorbing property, or a metal foil layer of aluminum or the like. It is preferred that the gas barrier layer be an intermediate layer of the container having a multilayer structure.

As a preferred material for forming an intermediate layer formed of a gas barrier resin, a saponified ethylene-vinyl acetate copolymer having an ethylene content of 20 to 50 mol% and saponification degree of 97 mol% or more can be exemplified. In particular, a material having MFR measured at 210°C of 3.0 to 15.0 g/10 min is preferably used.

Other examples of the gas barrier resin include: polyamides having 3 to 30 amide groups and particularly 4 to 25 amide groups per 100 carbon atoms; polyamides having an aromatic ring; a cyclic olefin copolymer resin; polyacrilonitrile; and a high-density aliphatic polyester having a density of 1.5 or more such as a polyglycolic acid copolymer. One kind of the gas barrier resin may be used alone, or two or more kinds thereof may be mixed and used. Further, another thermoplastic resin may be mixed into the gas barrier resin within a range not inhibiting its properties.

Further, when the cartridge does not require transparency, various known barrier films may be used as the gas barrier resin. Examples of other barrier films include: a silica vapor deposited polyester film, an alumina vapor deposited polyester film, a silica vapor deposited nylon film, an alumina vapor deposited nylon film, an alumina vapor deposited polypropylene film, a carbon vapor deposited polyester film, a carbon vapor deposited nylon film; a co-vapor deposited film prepared through co-vapor deposition of alumina and silica on a base film such as a polyester film or a nylon film; a nylon 6/metaxylene diamine nylon 6 co-extruded film, a propylene/ethylene vinyl alcohol copolymer co-extruded film; an organic resin-coated film such as a polyvinyl alcohol-coated polypropylene film, a polyvinyl alcohol-coated polyester film, a polyvinyl alcohol-coated nylon film, a polyacrylic resin-coated polyester film, a polyacrylic resin-coated nylon film, a polyacrylic resin-coated polypropylene film, a polyglycolic acid resin-coated polyester film, a polyglycolic acid resin-coated nylon film, or a polyglycolic acid resin-coated polypropylene film; and a film prepared by coating a hybrid coating material formed of an organic resin material and an inorganic material on a base film such as a polyester film, a nylon film, or a polypropylene film. One kind of barrier film may be used alone, or two or more kinds thereof may be used in combination.

A resin having an oxygen absorbable property may employ (1) a resin having oxygen absorbing property itself or (2) a resin composition containing an oxygen absorber in a thermoplastic resin having or not having oxygen absorbing property. The thermoplastic resin used for forming the oxygen absorbable resin composition (2) is not particularly limited, and a thermoplastic resin having oxygen barrier property or a thermoplastic resin having no oxygen barrier property may be used. Use of a resin having oxygen absorbing property or oxygen barrier property itself for the thermoplastic resin used for forming the resin composition (2) is preferred because intrusion of oxygen into the container may be effectively prevented by combination with an oxygen absorbing effect of the oxygen absorber.

An example of the resin having oxygen absorbing property itself is a resin utilizing an oxidation reaction of the resin. Examples of such a material include an oxidative organic material such as polybutadiene, polyisoprene, polypropylene, ethylene/carbon monoxide copolymer, or polyamides such as 6-nylon, 12-nylon, or metaxylene diamine (MX) nylon having organic acid salts each containing a transition metal such as cobalt, rhodium, or copper as an oxidation catalyst or a photosensitizer such as benzophenone, acetophenone, or chloroketones added. In the case where the oxygen absorbing material is used, high energy rays such as UV rays or electron rays may be emitted, to thereby develop further oxygen absorbing effects.

Any oxygen absorbers conventionally used for such applications can be used as an oxygen absorber to be mixed into a thermoplastic resin. A preferred oxygen absorber is generally reductive and substantially insoluble in water. Appropriate examples thereof include: metal powder having reducing power such as reductive iron, reductive zinc, or reductive tin powder; a lower metal oxide such as FeO or $Fe_3O_4$; and a reductive metal compound containing as a main component one or two or more kinds of iron carbide, ferrosilicon, iron carbonyl, and iron hydroxide in combination. An example of a particularly preferred oxygen absorber is reductive iron such as reductive iron obtained by reducing iron oxide obtained in a production process of steel, pulverizing produced sponge iron, and conducting finish reduction in a hydrogen gas or a decomposed ammonia gas. Another example thereof is reductive iron obtained by electrolytically depositing iron from an aqueous solution of iron chloride obtained in a pickling step during steel production, pulverizing the resultant, and conducting finish reduction.

As required, the oxygen absorber may be used in combination with: an oxidation accelerator formed of an electrolyte such as a hydroxide, carbonate, sulfite, thiosulfate, tribasic phosphate, dibasic phosphate, organic acid salt, or halide of an alkali metal or alkali earth metal; and an assistant such as active carbon, active alumina, or active clay. Particularly preferred examples of the oxygen accelerator include sodium chloride, calcium chloride, and a combination thereof.

In the case where reductive iron and the oxidation accelerator are used in combination, a mixing amount thereof is preferably 99 to 80 parts by weight of reductive iron and 1 to 20 parts by weight of oxidation accelerator, in particular, 98 to 90 parts by weight of reductive iron and 2 to 10 parts by weight of oxidation accelerator with respect to 100 parts by weight in total.

Another example of the oxygen absorber is a polymer compound having a polyhydric phenol in a skeleton such as a phenol/aldehyde resin having a polyhydric phenol. Further, ascorbic acid, erysorbic acid, tocophenols, and salts thereof which are water-soluble substances may appropriately be used. Of oxygen absorbable substances, reductive iron and an ascorbic acid-based compound are particularly preferred.

Further, a thermoplastic resin may contain the resin having oxygen absorbing property itself as an oxygen absorber.

The oxygen absorber preferably has an average particle size of generally 50 μm or less, and particularly preferably 30 μm or less. In the case where the packaging container requires transparency or translucency, an oxygen absorber having an average particle size of preferably 10 μm or less, andparticularlypreferably 5 μm or less is used. The oxygen absorber is preferably mixed into the resin in a ratio of preferably 1 to 70 wt%, and particularly preferably 5 to 30 wt%.

The oxygen absorbable resin layer can be constituted as a gas barrier layer of a container having a multilayer structure. Alternatively, another gas barrier layer may be provided in the container, and then an oxygen absorbable resin layer may be further formed.

As another material for forming the gas barrier layer of the container having a multilayer structure, a metal foil of aluminum, tin, copper, iron, or the like may be used.

In the case where the methanol fuel cell cartridge of the present invention has a multilayer structure, resins each formed of a thermoplastic resin having or not having heat sealing property may be used as a material for forming an inner layer, an outer layer, or the like of the container.

Examples of such a thermoplastic resin include: polyolefins such as crystalline polypropylene, crystalline propylene/ ethylene copolymer, crystalline polybutene-1, crystalline poly4-methylpentene-1, low-, medium-, or high-density polyethylene, ethylene/vinyl acetate copolymer (EVA), EVA saponified product, ethylene/ethyl acrylate copolymer (EEA), and ion crosslinked olefin copolymer (ionomer); aromatic vinyl copolymers such as polystyrene or styrene/butadiene copolymer; halogenated vinyl polymers such as polyvinyl chloride or vinylidene chloride resin; polyacrylic resins; nitrile polymers such as acrylonitrile/styrene copolymer or acrylonitrile/styrene/butadiene copolymer; polyesters such as polyethylene terephthalate and polytetramethylene terephthalate; various polycarbonates; fluorine-based resins; and polyacetals such as polyoxymethylene. One kind of thermoplastic resin may be used alone, or two or more kinds thereof may be blended and used. Further, the thermoplastic resin may be used by mixing various additives.

An adhesive resin is interposed between respective layers of the container having a multilayer structure as required. There is no particular limitation to the adhesive resin, and any of polyurethane-based resin, acid-modified ethylene-α-olefin copolymer, vinyl acetate-based resin, and the like generally used for production of a plastic container may be used.

As the acid-modified ethylene-α-olefin copolymer, a resin obtained through graft modification of an ethylene-α-olefin copolymer prepared through copolymerization of ethylene and an α-olefin having 10 or less carbon atoms such as propylene, 1-butene, 1-pentene, 1-heptene, or 1-octene with an unsaturated carboxylic acid such as acrylic acid, methacrylic acid, maleic acid, fumaric acid, itaconic acid, or crotonic acid or an anhydride thereof is preferably used. The graft modification rate of those adhesive resins is preferably about 0.05 to 5 wt%. One kind of acid-modified ethylene-α-olefin copolymer may be used alone, or two or more kinds thereof may be mixed and used. Further, an ethylene-α-olefin copolymer modified beforehand with an acid in high concentration may be compounded with a polyolefin-based resin such as unmodified low-density polyethylene, ethylene-vinyl acetate copolymer, ethylene-α-olefin copolymer, or high-density polyethylene, and the thus-obtained blended product adjusted to have an acid modification rate of about 0.05 to 5 wt% as a whole resin may be preferably used as an adhesive resin.

The resin layer for forming the methanol fuel cell cartridge of the present invention may be compounded with an additive, as required, such as: a lubricant formed of a higher fatty amide such as amide oleate, amide stearate, amide erucate, or amide behenate; a crystalline nucleating agent generally added to a plastic container; a UV absorber; an antistatic agent; a colorant such as a pigment; an antioxidant; or a neutralizer.

A shape of the methanol fuel cell cartridge of the present invention is not limited, and may have various shapes such as a flat pouch and a standing pouch in addition to a shape of a hollow container such as a bottle, a cartridge, or a cup. Amethod of producing the container may employ a general method. For example, the hollow container such as a bottle, a cartridge, or a cup may be produced by a method including injection molding, blow molding such as direct blow or biaxial stretch blow molding, or vacuum-pressure molding, and the biaxial stretch blow molding is preferably employed. Further, the pouches such as a flat pouch and a standing pouch can be produced by heat sealing a multilayer film having a heat sealing resin layer as an innermost layer. Those containers are each preferably provided with means for forming a pouring portion such as a screw cap or a spout. Further, the pouring portion of the methanol fuel cell cartridge is particularly preferably provided with a valve mechanism for preventing leak.

Dimensions of the methanol fuel cell cartridge of the present invention are also not particularly limited. In the case where the cartridge is used for a fuel tank or a refill container for DMFC to be used as a power source for a laptop computer, a cellular phone, or the like, a content volume is preferably 1 to 500 ml, and particularly preferably about 10 to 200 ml.

Themethanol fuel cell cartridge of the present invention can be produced as a container having a single-layer or multilayer structure. Further, the obtained container may be installed in an outer case formed of a rigid material such as metal or a fiber reinforced plastic.

In the case where the container has a multilayer structure, preferred examples of the layer structure include, in the order from an inner layer side of the container: polyester/functional resin layer/polyester; polyester/functional resin layer/polyester/functional resin layer/polyester; polyester/adhesive layer (Ad)/functional resin layer/Ad/polyester; polyester/recycled material/polyester; and polyester/functional resin layer/recycled material/functional resin layer/polyester.

As the functional resin layer, a methanol barrier resin, an oxygen barrier resin, or an oxygen absorbable resin can be used. In the case of a film packaging material, a metal foil may be used instead of the functional resin layer. Aplurality of the functional resin layers maybe arranged, or a combination of different functional resin layers may be arranged. Further, as the recycled material, a factory scrap generated at the time of molding, a commercially available recycled material of PET bottles, or the like may be used.

As the innermost layer of the container having a multilayer structure, a polyester produced by using a titanium-based catalyst of the present invention is preferably used. Further, a resin layer having heat sealing property (sealant layer) or an inorganic vapor deposited coating film may be disposed on the innermost layer of the container.

Examples

Hereinafter, the present invention is described in more detail by way of examples, but the present invention is not limited to the following specific examples.

(Example 1)

As a resin used for forming a container, used was polyethylene terephthalate (PET) having P(MeOH) of 3.0 $\mu$g·mm/m$^2$·hr, a density of 1.41 g/cm$^3$, a melting point of 255°C, and an intrinsic viscosity (IV) of 0.76 dl/g, and being polymerized by using a Ti-based catalyst. The PET was subjected to injection molding by using an injection molding machine UH-1000 manufactured by Nissei Plastic Industrial Co., Ltd., to thereby obtain a single-layer bottle with a screw (thickness: 0.5 mm) having a full-content volume of 60 ml and a mass of 10 g.

(Example 2)

A preform was obtained from the PET used in Example 1 through injection molding by a conventional method. The preform was subjected to biaxial stretch blow molding at 2.5 times in a longitudinal direction and 3.5 times in a lateral direction with a biaxial stretch blow molding machine (Nissei ASB-50H manufactured by NISSEI ASB MACHINE CO., LTD.), to thereby produce a single-layer bottle having a full-content volume of 60 ml, a mass of 10 g, and an average thickness of 0.5 mm.

(Comparative Example 1)

A single-layer biaxially stretched blow bottle was produced in the same manner as in Example 2 except that PET polymerized by a Ge-based catalyst was used as a resin used for forming the bottle.

(Comparative Example 2)

A single-layer biaxially stretched blow bottle was produced in the same manner as in Example 2 except that PET polymerized by a Sb-based catalyst was used as a resin used for forming the bottle.

(Comparative Example 3)

A single-layer biaxially stretched blow bottle was produced in the same manner as in Example 2 except that, as a resin used for forming the bottle, used was polyethylene naphthalate (PEN) having P(MeOH) of 0.80 $\mu$g·mm/m$^2$·hr, a density of 1.33 g/cm$^3$, and a melting point of 265°C, and being polymerized by using a Sb-based catalyst.

(Example 3)

A single-layer biaxially stretched blow bottle was produced in the same manner as in Example 2 except that, as a resin used for forming the bottle, 95 wt% of the PET (Ti-based) used in Example 1 and 5 wt% of the PEN (Sb-based) used in Comparative Example 3 were blended and used.

(Comparative Example 4)

As a resin used for forming the container, used was an ethylene-propylene random copolymer (random PP) having P(MeOH) of 23 $\mu$g·mm/m$^2$·hr, a density of 0.9 g/cm$^3$, and an MFR at 230°C of 1.3 g/10 min. A parison was produced through extrusion of the random PP by a conventional method by using single-layer dies. The parison was subj ected to direct blow molding by a rotary blow molding machine, to thereby produce a single-layer blow bottle with a screw having a full-content volume of 60 ml and a mass of 10 g.

A methanol permeability coefficient, a cation index, and a transparency of each resin layer, when the bottles obtained in the above respective examples were used as a methanol fuel cell cartridge, were measured by the methods described in paragraphs [0010] to [0014], and the results thereof are shown in Table 1. Further, a methanol permeability of each cartridge was measured by the following method and was shown in Table 1.

(Method of measuring methanol permeability)

The cartridge to be measured was charged with 50 cc of methanol (Wako Pure Chemical Industries Ltd., "special grade"), and a cap material containing an aluminum foil was bonded thereto to seal the cartridge.

A weight of the filler was measured, and the cartridge was stored in a constant temperature tank at 40°C. The cartridge was taken out of the constant temperature tank after 3 weeks and weighed, and a weight reduction rate (%) was calculated from the following equation, to thereby determine the methanol permeability.

$$\text{Methanol permeability (mg/container·day)} = \{\text{initial weight (g)} - \text{weight after storage (g)}\} \times 10^3/21 \text{ days}$$

[Table 1]

|  | Layer structure | Molding method | Methanol permeability coefficient | Methanol permeability | Cation index | Transparency (%) |
|---|---|---|---|---|---|---|
| Example 1 | PET (Ti) single layer | Injection molding | 3.0 | 4.5 | 18 | 94 |
| Example 2 | PET (Ti) single layer | Biaxial stretch blow | 3.0 | 1.5 | 13 | 93 |

(continued)

|  | Layer structure | Molding method | Methanol permeability coefficient | Methanol permeability | Cation index | Transparency (%) |
|---|---|---|---|---|---|---|
| Comparative Example 1 | PET (Ge) single layer | Biaxial stretch blow | 3.0 | 1.5 | 320 | 93 |
| Comparative Example 2 | PET (Sb) single layer | Biaxial stretch blow | 3.0 | 1.5 | 7,300 | 94 |
| Comparative Example 3 | PEN (Sb) single layer | Biaxial stretch blow | 0.80 | 0.39 | 360 | 94 |
| Example 3 | PET (Ti) 95 wt% PEN (Sb) 5 wt% | Biaxial stretch blow | 2.8 | 1.4 | 30 | 91 |
| Comparative Example 4 | PP single layer | Direct blow | 23 | 34 | 140 | 68 |

Methanol permeability coefficient: $\mu g \cdot mm/m^2 \cdot hr$
Methanol permeability: mg/container·day

(Example 4)

A silicon oxide coating film was formed on an inner surface of the biaxially stretched blow bottle formed of a PET single layer and obtained in Example 2 through the following procedure. The biaxially stretched blow bottle formed of a PET single layer and obtained in Example 2 was attached in an inverted manner to a metallic cylindrical plasma treatment chamber which is shown in Patent Document 5. In the bottle, a gas introduction pipe formed of a metal sintered body was placed. Next, a vacuum pump was operated to maintain a degree of vacuum outside the bottle in the treatment chamber at 2 KPa and a degree of vacuum inside the bottle at 2 Pa. Subsequently, 2 seem of a hexamethyl disiloxane gas, 20 seem of oxygen, and 10 seem of argon were introduced as treatment gases, and the degree of vacuum in the bottle was adjusted to 50 Pa. 0.2 Kw of electric waves was emitted from a microwave generator for forming plasma in the bottle, and plasma treatment was conducted for 10 seconds, to thereby form a silicon oxide coating film having a thickness of 10 nm on the inner surface of the bottle.
The bottle had P(MeOH) of the resin layer of 3.0 $\mu g \cdot mm/m^2 \cdot hr$, a MeOH permeability of 0.13 mg/container·day, a cation index of 12, and an oxygen permeability coefficient of $3.9 \times 10^{-14}$ cc·cm/cm$^2$·sec·cmHg. Further, the oxygen permeability measured by the following method was $8.8 \times 10^{-3}$ cc/container·day.

(Method of measuring oxygen permeability of container)

1 cc of water was poured into a container to be measured, and a cap material containing an aluminum foil was bonded thereto in a nitrogen atmosphere to seal the container. The container was stored in a constant temperature and constant humidity tank at 30°C-80%RH. After storage for 3 weeks, an oxygen concentration in the bottle was measured by using gas chromatography. The oxygen permeability (Q(O$_2$; cc/container·day) was determined from the oxygen concentration based on the following equation.

$$Q(O_2) = [(C_1 - C_0)]/100] \times V$$

$C_1$: Oxygen concentration (%) in bottle after 3 weeks
$C_0$: Initial oxygen concentration (%) in bottle
V: Full-content volume of bottle (cc)

(Electricity generation performance of DMFC)

In DMFC, an electromotive force is exhibited by movement of protons in an electrolyte film. Therefore, when impurities are adsorbed to an organic functional group (e.g., sulfo group) in the electrolyte film, the movement of protons are interfered, to thereby decrease the electromotive force thereof. From the conventional test results, it is known that there is a linear relationship between a proportion of the sulfo group to be adsorbed and a decreasing rate of the electromotive force. When impurities are adsorbed to 10% of the sulfo groups, the electromotive force decreases by 10%. Hereinafter, a model case in which an electricity generation test for 10,000 hours is performed by using, as an electrolyte film, Nafion 117 (product name) manufactured by Du Pont Co., Ltd. is examined.

The proportion of the sulfo group to be adsorbed is influenced by the concentration and amount of methanol passing through the electrolyte film and a power density. In order to suppress the decrease of the electromotive force within 10% in a methanol fuel cell after electricity generation for 10, 000 hours at a power density of 250 mW/cm$^2$, trivalent aluminum ions are generally required to be suppressed to 10 ppb or less based on pure methanol conversion. Because monovalent cation adsorbs to one organic functional group, it is required that the cation index shown in the above equation be 30 or less. Note that the polyester used in the present invention is not considered to include the monovalent cation, therefore, the monovalent cation was excluded from the measurement target.

**Claims**

1. A methanol fuel cell cartridge, comprising
   a polyester-based resin layer which has a methanol vapor permeability coefficient at 40°C of 3 $\mu$g·mm/m$^2$·hr or less and a cation index in a methanol immersion test of 30 or less, and is produced by using a titanium-based catalyst.

2. A methanol fuel cell cartridge according to claim 1, wherein the polyester-based resin layer is formed of a resin containing polyethylene terephthalate as a main component.

3. A methanol fuel cell cartridge according to claim 1 or 2, wherein the cartridge is produced by stretch blow molding.

4. Amethanol fuel cell cartridge according to any one of claims 1 to 3, wherein the cartridge is installed in an outer case formed of a rigid material.

5. Amethanol fuel cell cartridge according to any one of claims 1 to 4, wherein the methanol fuel cell cartridge comprises a valve mechanism at a pouring portion thereof.

## INTERNATIONAL SEARCH REPORT

| International application No. |
|---|
| PCT/JP2007/059761 |

A. CLASSIFICATION OF SUBJECT MATTER
*H01M8/04*(2006.01)i, *H01M8/10*(2006.01)n

According to International Patent Classification (IPC) or to both national classification and IPC

B. FIELDS SEARCHED

Minimum documentation searched (classification system followed by classification symbols)
H01M8/04, H01M8/10

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-322441 A (Hideo ENDO), 17 November, 2005 (17.11.05), Full text (Family: none) | 1-5 |
| A | JP 2005-266911 A (Hitachi, Ltd.), 29 September, 2005 (29.09.05), Par. No. [0038] (Family: none) | 1-5 |
| A | JP 11-130856 A (Kanebo, Ltd.), 18 May, 1999 (18.05.99), Full text (Family: none) | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 July, 2007 (17.07.07) | 31 July, 2007 (31.07.07) |

| Name and mailing address of the ISA/ Japanese Patent Office | Authorized officer |
|---|---|
| Facsimile No. | Telephone No. |

Form PCT/ISA/210 (second sheet) (April 2005)

**INTERNATIONAL SEARCH REPORT**

International application No.

PCT/JP2007/059761

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-127659 A (Sanyo Chemical Industries, Ltd.), 22 April, 2004 (22.04.04), Par. Nos. [0047], [0048] & US 2005/0136247 A1 & EP 1462460 A1 & WO 03/057745 A1 | 1-5 |
| A | JP 2004-155450 A (Toyobo Co., Ltd.), 03 June, 2004 (03.06.04), Full text (Family: none) | 1-5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004265872 A
- JP 2004259705 A
- JP 2004152741 A
- JP 2004155450 A
- JP 2003236976 A